# EUROPÄISCHE PATENTSCHRIFT

(11) **EP 3 292 699 B1**
(45) Veröffentlichungstag und Bekanntmachung des Hinweises auf die Patenterteilung: **28.08.2019**
(21) Anmeldenummer: 16724310.4
(22) Anmeldetag: 03.05.2016
(51) Int. Cl.: H04Q 9/04, H04J 3/00

(54) **BETREIBEN EINER DETEKTIONSEINRICHTUNG EINES KRAFTFAHRZEUGS ZUM ERFASSEN EINES UMGEBUNGSBEREICHES NEBST EINER SOLCHEN DETEKTIONSEINRICHTUNG**
OPERATION OF A DETECTION DEVICE OF A MOTOR VEHICLE FOR DETECTING A SURROUNDING AREA, AND SUCH A DETECTION DEVICE
FONCTIONNEMENT D'UN DISPOSITIF DE DÉTECTION D'UN VÉHICULE AUTOMOBILE POUR LA DÉTECTION D'UNE RÉGION ENVIRONNANTE ET DISPOSITIF DE DÉTECTION DE CE TYPE

(30) Priorität: 04.05.2015 DE 102015106848
(43) Veröffentlichungstag der Anmeldung: 14.03.2018
(73) Patentinhaber: Valeo Schalter und Sensoren GmbH, 74321 Bietigheim-Bissingen (DE)
(72) Erfinder: KLEISER, Michael, 74321 Bietigheim-Bissingen (DE); SCHENK, Jochen, 74321 Bietigheim-Bissingen (DE); NIES, Juergen, 74321 Bietigheim-Bissingen (DE)
(74) Vertreter: Withopf, Kristina
(86) Internationale Anmeldenummer: PCT/EP2016/059815
(87) Internationale Veröffentlichungsnummer: WO 2016/177689

(56) Entgegenhaltungen:
- DE-A1- 10 340 165
- DE-A1-102013 202 320
- UNKNOWN: "Digital Phase-Locked Loop Design Using SN54/74LS297", TEXAS INSTUMENTS, , Nr. SDLA005B 1. März 1997 (1997-03-01), Seiten 1-19, XP002506890, Gefunden im Internet: URL:http://focus.ti.com/lit/an/sdla005b/sd la005b.pdf [gefunden am 2008-12-04]

## Beschreibung

Die Erfindung betrifft ein Verfahren zum Betreiben einer Detektionseinrichtung eines Kraftfahrzeugs, welche zum Erfassen eines Umgebungsbereiches eines Kraftfahrzeugs ausgebildet ist, wobei die Detektionseinrichtung zum Datenaustausch mit einem Datenbus des Kraftfahrzeugs kommuniziert und wiederholt Abtastdaten aus dem Umgebungsbereich erfasst. Die Erfindung betrifft auch eine Detektionseinrichtung für ein Kraftfahrzeug, welche zum Erfassen eines Umgebungsbereiches eines Kraftfahrzeugs und zum Kommunizieren in Form eines Datenaustausches mit einem Datenbus des Kraftfahrzeugs ausgebildet ist, und mittels welcher wiederholt Abtastdaten aus dem Umgebungsbereich erfassbar sind, mit einer Abtasteinheit zum Erfassen von Abtastdaten mit einer Erfassungsgeschwindigkeit.

In heutigen Kraftfahrzeugen kommt eine Vielzahl von elektronischen Einrichtungen zum Einsatz, welche untereinander größtenteils über einen Datenbus kommunizieren. Hierbei können Datenbusse mit asynchronem oder isochronem Übertragungsmodus zum Einsatz kommen. Bei Verwendung eines isochronen Übertragungsmodus werden den entsprechenden elektronischen Einrichtungen in einer dem Datenbus zugehörigen Datenbasis fest entsprechende Zeitfenster für das jeweilige Kommunizieren zugeordnet. Kommunizieren mehrere der Einrichtungen über den Datenbus, so kann jede Einrichtung ihre zugehörigen Daten nur zu dem zugeordneten Zeitfenster kommunizieren oder übertragen. Dies erfordert eine Synchronisation, also ein zeitliches Abstimmen der elektronischen Einrichtung mit dem Datenbus.

So kann beispielsweise ein Laserscanner zum Erfassen eines Umgebungsbereiches eines Kraftfahrzeugs für einen Scandurchlauf eine bestimmte Zeit benötigen, beispielsweise 40 Millisekunden. Diese Daten können dann in Datenpakete aufgeteilt werden, welche in den entsprechenden Zeitfenstern an den Datenbus kommuniziert werden. Es können beispielsweise vorliegend acht Datenpakete im 5-Millisekunden-Takt bereitgestellt werden, welche dann in mehreren, jeweils dem Laserscanner zugeordneten Zeitfenstern übertragen werden.

Die DE 103 40 165 A1 offenbart ein Verfahren zur Anbindung wenigstens eines Sensors oder Aktors an ein zeitgesteuertes Bussystem, wobei der Sensor oder Aktor eine Signalverarbeitung, welche in wenigstens zwei Phasen aufgeteilt ist, durchführt. Dabei wird der Sensor oder Aktor in wenigstens einer der Phasen an eine sensorexterne Zeit des zeitgesteuerten Bussystems synchronisiert.

Die DE 10 2013 202 320 A1 offenbart ein Verfahren zum Erfassen von mindestens einem Messwert, bei dem einem Sensor von einer Einheit ein periodisches Signal bereitgestellt wird, das aus einer Zeitbasis eines Taktgenerators der Einheit abgeleitet wird. Hierbei wird die Zeitbasis der Einheit in einer Zeitbasis eines Taktgenerators des Sensors ausgedrückt. Der mindestens eine Messwert wird zu mindestens einem Abtastzeitpunkt erfasst, der durch die Zeitbasis des Taktgenerators des Sensors vorgegeben wird, die an die Zeitbasis des Taktgenerators der Einheit angepasst ist.

Es ergibt sich die Aufgabe, den Datenaustausch einer Detektionseinrichtung eines Kraftfahrzeugs mit einem Datenbus des Kraftfahrzeugs zu verbessern.

Diese Aufgabe wird durch die Gegenstände der unabhängigen Ansprüche gelöst. Vorteilhafte Ausführungsformen ergeben sich aus den abhängigen Ansprüchen, der Beschreibung und den Figuren.

Die Erfindung umfasst ein Verfahren zum Betreiben einer Detektionseinrichtung eines Kraftfahrzeugs, welche zum Erfassen eines Umgebungsbereiches des Kraftfahrzeugs ausgebildet ist. Dabei kommuniziert die Detektionseinrichtung zum Datenaustausch mit einem Datenbus des Kraftfahrzeugs und erfasst wiederholt Abtastdaten aus dem Umgebungsbereich. Das Verfahren umfasst dabei zunächst ein Erfassen von Abtastdaten durch eine Abtasteinheit der Detektionseinrichtung mit einer Erfassungsgeschwindigkeit. Ein weiterer Schritt ist ein Feststellen eines Abtast-Endzeitpunktes, zu welchem das Erfassen der Abtastdaten abgeschlossen ist, durch eine Recheneinheit. Das Feststellen kann ein Abschätzen umfassen. Auch ein Ermitteln einer Differenzzeit zwischen dem festgestellten Abtast-Endzeitpunkt und einem Anfangszeitpunkt eines der Detektionseinrichtung gemäß einem Protokoll des Datenbusses oder gemäß der dem Datenbus zugehörigen Datenbasis zugeordneten Übertragungsfensters durch die Recheneinheit ist Teil des Verfahrens. Schließlich erfolgt ein Vorgeben der Erfassungsgeschwindigkeit für ein zukünftiges Erfassen von Abtastdaten in Abhängigkeit der ermittelten Differenzzeit durch die Recheneinheit.

Das hat den Vorteil, dass Schwankungen der Latenz, also der Verzögerung, zwischen dem Zeitpunkt der Entstehung und dem Zeitpunkt des Kommunizierens der erfassten Abtastdaten verhindert beziehungsweise reduziert werden. Es kann somit eine zumindest weitgehend konstante Latenz erzielt werden. Damit kann auch ein sogenanntes Driften, also ein "Slot-Springen" oder Überspringen von Übertragungsfenstern verhindert werden, welches bei Schwankungen in der Latenz typischerweise auftritt. Damit wird im Gesamtsystem von Kraftfahrzeug, Datenbus und Detektionseinrichtung auch der sogenannte "Jitter", also die Varianz der Laufzeit der kommunizierten Signale verringert.

In einer vorteilhaften Ausführungsform ist vorgesehen, dass über das Vorgeben der Erfassungsgeschwindigkeit ein Synchronisieren des Abtast-Endzeitpunkts mit einem vorgegebenen Zeitraster des Datenbusses erfolgt. Das hat den Vorteil, dass eine sehr geringe Latenz erzielt wird und Totzeiten der Detektionseinrichtung vermieden werden können.

In einer weiteren vorteilhaften Ausführungsform ist vorgesehen, dass das Vorgeben der Erfassungsgeschwindigkeit ein Erhöhen und ein Verringern der aktuellen Erfassungsgeschwindigkeit umfasst, so dass die Differenzzeit einem vorgegebenen Sollwert angeglichen wird. Insbesondere kann das Erhöhen und/oder Verringern und damit auch das Angleichen der Differenzzeit an den Sollwert schrittweise erfolgen. Das hat den Vorteil, dass das Angleichen der Differenzzeit an den vorgegebenen Sollwert schrittweise erfolgen kann. Das Angleichen ist durch das Erhöhen und/oder Verringern auch besonders einfach zu realisieren, da in der Recheneinheit keine weitere Information über Eigenschaften der Detektionseinrichtung hinterlegt sein muss. Insbesondere kann das Erhöhen und/oder Verringern auch ein Erhöhen beziehungsweise Verringern um relative Werte, also beispielsweise Prozentwerte der aktuellen Erfassungsgeschwindigkeit oder um durch die Größe der ermittelten Differenzzeit vorgegebene relative oder absolute Werte erfolgen. Das hat den Vorteil, dass so ein besonders genaues Einregeln der Erfassungsgeschwindigkeit und somit der Latenz erreicht wird.

In einer besonders vorteilhaften Ausführungsform ist hier vorgesehen, dass der Sollwert mit Null vorgegeben wird. Das hat den Vorteil, dass die erfassten Abtastdaten sofort bei dem Anfangszeitpunkt des Übertragungsfensters zur Verfügung stehen und so eine minimale Latenz erreicht wird.

In einer vorteilhaften alternativen Ausführungsform kann hier vorgesehen sein, dass der Sollwert mit von Null verschieden vorgegeben wird, wobei insbesondere als von Null verschieden ein Liegen des Abtast-Endzeitpunktes zeitlich vor dem Anfangszeit repräsentiert wird. Das hat den Vorteil, dass so ein zeitlicher Puffer realisiert wird, welcher beispielsweise unvermeidbare Schwankungen in der Erfassungsgeschwindigkeit (so diese messbar von Null verschieden sind) kompensiert.

In einer hierzu wiederum alternativen bevorzugten Ausführungsform ist vorgesehen, dass der Sollwert von Null verschieden vorgegeben wird und dabei als von Null verschieden ein Liegen des Abtast-Endzeitpunktes zeitlich nach dem Anfangszeitpunkt repräsentiert wird. In diesem Fall erfolgt dann das Kommunizieren oder Übermitteln der Abtastdaten bereits vor einem Abschließen des Erfassens. Dabei wird sichergestellt, dass der Abtast-Endzeitpunkt sich noch innerhalb des Übertragungsfensters befindet, so dass sämtliche vor dem Abtast-Endzeitpunkt erfassten Abtastdaten auch kommuniziert oder übertragen werden können. Das hat den Vorteil, dass so die übertragenen Abtastdaten besonders aktuell sind. Gerade bei einem großen Datenvolumen kann so gegebenenfalls auch ein Zwischenspeichern der Abtastdaten in der Detektionseinrichtung zumindest teilweise entfallen.

Erfindungsgemäß ist vorgesehen, dass das Vorgeben der Erfassungsgeschwindigkeit durch ein Vorgeben von zumindest einem Bewegungscharakteristikum eines Spiegels der Detektionseinrichtung erfolgt. Das hat den Vorteil, dass die Erfassungsgeschwindigkeit besonders einfach und beispielsweise bei einem analog vorgebbaren Bewegungscharakteristikum auch stufenlos erfolgen kann.

Dabei ist erfindungsgemäß vorgesehen, dass das Bewegungscharakteristikum durch eine Drehzahl eines rotierenden Spiegels oder eine Verweildauer zumindest eines Mikrospiegels in einer vorgegebenen Kippstellung beschrieben wird. Das hat den Vorteil, dass die Erfassungsgeschwindigkeit sehr genau eingestellt werden kann.

In einer weiteren bevorzugten Ausführungsform ist vorgesehen, dass die Schritte des Erfassens, des Feststellens und des Ermittelns sowie des Vorgebens wiederholt durchgeführt werden. Bevorzugt erfolgt dies in genau dieser angegebenen Reihenfolge des Erfassens gefolgt von dem Feststellen gefolgt von dem Ermitteln gefolgt von dem Vorgeben. Das wiederholte Durchführen hat den Vorteil, dass ein sehr genaues Einregeln der Erfassungsgeschwindigkeit und damit der Latenz erreicht wird. Überdies kann so dynamisch auf sich verändernde Eigenschaften der Detektionseinrichtung oder weiterer Komponenten wie dem Datenbus reagiert werden und so stets eine in den vorliegenden Umständen konstante, insbesondere geringe Latenz erreicht werden. Die angegebene Reihenfolge ist hier besonders effizient.

In einer anderen bevorzugten Ausführungsform ist vorgesehen, dass die Detektionseinrichtung mit einem Datenbus mit einem isochronen Übertragungsmodus kommuniziert. Insbesondere kommuniziert die Detektionseinrichtung mit einem Datenbus, welcher den FlexRay Standard und/oder die ISO Standards 17458-1 bis 17458-5 und/oder den Time-Triggered Communication on Controller Area Network Standard (TTCAN) unterstützt. Dies ist besonders vorteilhaft, da es sich bei den aufgeführten Standards um Standards handelt, welche bevorzugt in Kraftfahrzeugen genutzt werden. Eine konstante beziehungsweise minimierte Latenz ist gerade an einem Datenbus mit isochronem Übertragungsmodus besonders vorteilhaft und in Kraftfahrzeugen teilweise kritisch.

Die Erfindung betrifft auch eine Detektionseinrichtung für ein Kraftfahrzeug, welche zum Erfassen eines Umgebungsbereiches des Kraftfahrzeugs und zum Kommunizieren in Form eines Datenaustausches mit einem Datenbus des Kraftfahrzeugs ausgebildet ist. Mittels der Detektionseinrichtung sind dabei wiederholt Abtastdaten aus dem Umgebungsbereich erfassbar. Zum Erfassen dieser Abtastdaten aus dem Umgebungsbereich weist die Detektionseinrichtung dabei eine Abtasteinheit zum Erfassen von Abtastdaten mit einer Erfassungsgeschwindigkeit auf. Wesentlich für die Erfindung ist hier, dass die Detektionseinrichtung auch eine Recheneinheit aufweist, mittels welcher ein Abtast-Endzeitpunkt feststellbar ist, zu welchem das Erfassen der Abtastdaten abgeschlossen ist, und mittels welcher eine Differenzzeit zwischen dem festgestellten Abtast-Endzeitpunkt und einem Anfangszeitpunkt eines der Detektionseinrichtung gemäß einem Protokoll des Datenbusses zugeordneten Übertragungsfensters ermittelbar ist, sowie mittels welcher die Erfassungsgeschwindigkeit für ein zukünftiges Erfassen von Abtastdaten in Abhängigkeit der ermittelten Differenzzeit vorgebbar ist.

Vorteile und vorteilhafte Ausführungsformen der Detektionseinrichtung entsprechen hier den Vorteilen und vorteilhaften Ausführungsformen des Verfahrens zum Betreiben der Detektionseinrichtung und umgekehrt.

Erfindungsgemäß ist vorgesehen, dass die Abtasteinheit einen bewegbaren Spiegel umfasst, insbesondere einen rotierbaren Spiegel. Somit kann über ein Vorgeben von einem Bewegungscharakteristikum des Spiegels auf einfache Weise die Erfassungsgeschwindigkeit eingestellt werden.

In einer weiteren vorteilhaften Ausführungsform ist vorgesehen, dass die Abtasteinheit eine Lichtquelle umfasst, insbesondere eine Laserlichtquelle. Die Laserlichtquelle kann dabei ein Infrarotlaser sein. Die Lichtquelle kann auch in einem Pulsbetrieb betreibbar sein. Das hat den Vorteil, dass ein Umgebungsbereich berührungslos erfassbar ist, was für ein Kraftfahrzeug besonders vorteilhaft ist. Gerade ein Laser, insbesondere ein unsichtbarer Infrarotlaser ist im Straßenverkehr vorteilhaft. Ein Pulsbetrieb liefert Vorteile im Energieverbrauch sowie in der digitalen Datenverarbeitung.

Gemäß einer besonders bevorzugten Ausführungsform ist die Detektionseinrichtung ein Laserscanner. Gerade für einen Laserscanner ist eine gleichmäßige und/oder verringerte Latenz besonders vorteilhaft, da bei einem solchen Laserscanner sehr viele Abtastdaten anfallen und entsprechend ein Überspringen eines Übertragungsfensters besonders schwerwiegende Folgen hat. Auch können gerade in einem Kraftwagen mehrere derartige Detektionseinrichtungen an den Datenbus kommunizieren, und so ist es besonders wünschenswert, dass die Synchronisation mit dem Datenbus mit einer möglichst gleichmäßigen und möglichst geringen Latenz realisiert wird.

Die vorstehend in der Beschreibung genannten Merkmale und Merkmalkombinationen, sowie die nachfolgend in der Figurenbeschreibung genannten und/oder in der Figur allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind somit auch Ausführungen und Merkmalskombinationen als offenbart anzusehen, die nicht alle Merkmale eines ursprünglich formulierten unabhängigen Anspruchs aufweisen.

Ausführungsbeispiele der Erfindung werden nachfolgend anhand schematischer Zeichnungen näher erläutert. Es zeigt:
- Fig. 1: ein Kraftfahrzeug mit zwei Exepmlaren einer beispielhaften Ausführungsform einer Detektionsvorrichtung; und
- Fig. 2: eine schmatische Darstellung einer weiteren beispielhaften Ausführungsform einer Detektionseinrichtung.

Gleiche oder funktionsgleiche Elemente sind dabei in den Figuren mit den gleichen Bezugszeichen versehen.

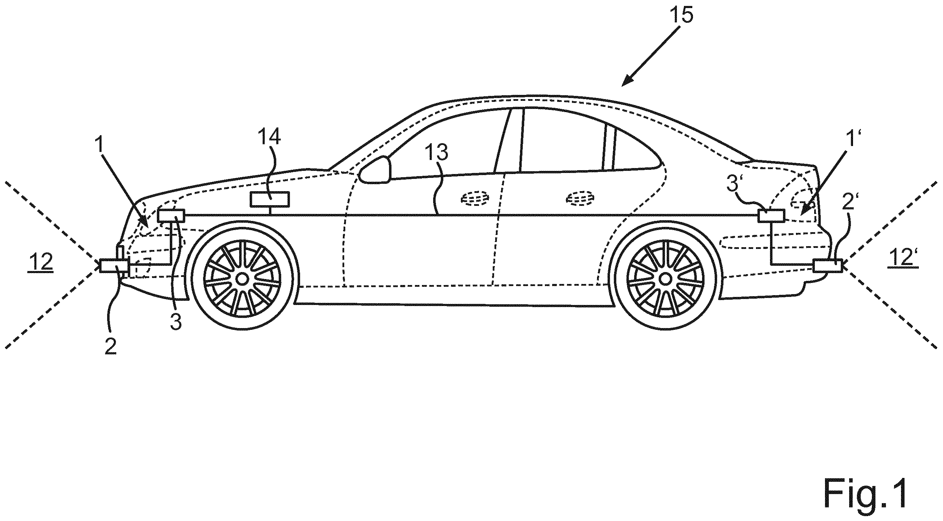

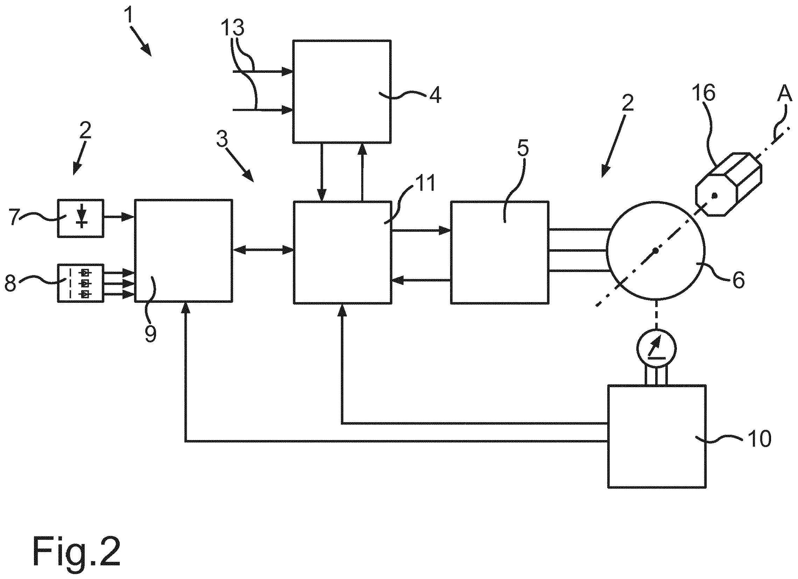

In Fig. 1 ist eine schematische Seitenansicht eines Kraftfahrzeugs 15 mit jeweiligen Detektionseinrichtungen 1, 1' zum Erfassen jeweiliger Umgebungsbereiche 12, 12' des Kraftfahrzeugs 15 dargestellt. Die beiden Detektionseinrichtungen 1, 1' haben dabei jeweils eine Abtasteinheit 2, 2' zum Erfassen von Abtastdaten der jeweiligen Umgebungsbereiche 12, 12'. Dieses Erfassen erfolgt mit einer bestimmten Erfassungsgeschwindigkeit. Die beiden Detektionseinrichtungen 1, 1' weisen vorliegend auch jeweilige Recheneinheiten 3, 3' auf, mittels welcher ein jeweiliger Abtast-Endzeitpunkt feststellbar ist, zu welchem das Erfassen der Abtastdaten durch die jeweiligen Abtasteinheiten 2, 2' abgeschlossen ist. Über die beiden Recheneinheiten 3, 3' sind die beiden Detektionseinrichtungen 1, 1' vorliegend auch an einen Datenbus 13 angeschlossen. Darüber hinaus ist mittels der jeweiligen Recheneinheiten 3, 3' auch eine Differenzzeit zwischen dem jeweiligen festgestellten Abtast-Endzeitpunkt und einem jeweiligen Anfangszeitpunkt eines der entsprechenden Detektionseinrichtung 1, 1' gemäß einem Protokoll eines Datenbusses 13 zugeordneten Übertragungsfensters ermittelbar. Auch ist durch die jeweiligen Recheneinheiten 3, 3' jeweils die Erfassungsgeschwindigkeit für ein zukünftiges Erfassen von Abtastdaten durch die zugeordnete Abtasteinheit 2, 2' in Abhängigkeit von der ermittelten Differenzzeit vorgebbar. Damit im gezeigten Beispiel eine übergeordnete Steuereinheit 14, welche hier ebenfalls an dem Datenbus 13, der beispielsweise als FlexRay Bus ausgeführt ist, zuverlässig mit einer möglichst geringen Latenz die jeweiligen Abtastdaten der Detektionseinrichtungen 1, 1' übermittelt bekommt, können die beiden Detektionseinrichtungen 1, 1' ausgeführt sein wie es beispielsweise in Fig. 2 anhand einer weiteren beispielhaften Ausführungsform einer Detektionseinrichtung 1 dargelegt ist.

In der Fig. 2 ist eine weitere beispielhafte Ausführungsform einer Detektionseinrichtung 1 mit einer Abtasteinheit 2 sowie einer Recheneinheit 3 dargestellt. Zusätzlich umfasst die Detektionseinrichtung 1 vorliegend noch eine Sendeempfangseinheit 4 zum Kommunizieren mit dem Datenbus 13 (Fig. 1), beispielsweise einem FlexRay Bus.

Da die Detektionseinrichtung 1 im gezeigten Beispiel als ein Laserscanner ausgeführt ist, weist die Abtasteinheit 2 vorliegend zunächst ein Motorsteuergerät 5 auf, mittels welchem ein Motor 6, der an einer Welle A einen rotierbaren Spiegel 16 aufweist, sowie eine vorliegend als Laserlichtquelle 7, hier Infrarotlaserlichtquelle, ausgeführte Lichtquelle und eine der Lichtquelle zugeordnete Empfangseinheit 8, vorliegend eine Avalanche- oder Lawinen-Photodiode. Die Laserlichtquelle 7 und die Empfangseinheit 8 sind hier mit einem digitalen Signalprozessor 9 der Recheneinheit 3 der Detektionseinrichtung 1 gekoppelt. Der Motor 6 der Abtasteinrichtung 2 ist mit einem Drehgeberencoder 10 gekoppelt, welcher seinerseits einerseits mit dem digitalen Signalprozessor 9 sowie einem Hostcontroller 11 der Recheneinheit 3 gekoppelt ist. Der Hostcontroller 10 ist mit der Sendeempfangseinheit 4 und dem Motorsteuergerät 5 gekoppelt.

Im vorliegenden Beispiel wird nunmehr über zwei Regelprozesse eine konstante und möglichst geringe Latenz zwischen einem Abtast-Endzeitpunkt, zu welchem ein Erfassen der Abtastdaten abgeschlossen ist und einem Anfangszeitpunkt eines Übertragungsfensters, in welchem die Abtastdaten über die Sendeempfangseinheit 4 an dem Datenbus 13 (Fig. 1) bereitgestellt werden, erreicht. Im vorliegenden Beispiel ist die Synchronisation als eine kaskadierte Regelung der beiden Regelprozesse zu sehen.

Der erste, im Vergleich zum zweiten schnelle Regelprozess regelt hier die Drehzahl des Motors 6 des Laserscanners auf einen gewünschten Sollwert. Vorliegend gibt der Hostcontroller 11 beispielsweise ein pulsweitenmoduliertes Steuersignal mit einem vorgegebenen Tastverhältnis für eine Solldrehzahl des Motors 6 an das Motorsteuergerät 5. Das Motorsteuergerät 5 erzeugt dann hier das entsprechende Drehfeld für die Solldrehzahl. Über den Drehgeberencoder 10 wird ein Drehgeber-Indexsignal erzeugt und an den Hostcontroller 11 übermittelt, welche es diesem erlauben, eine aktuelle tatsächliche Drehzahl des Motors 6 zu berechnen. Der Hostcontroller 11 vergleicht dann die aktuelle Drehzahl mit der Solldrehzahl und verändert entsprechend das Steuersignal, vorliegend das Tastverhältnis der Pulsweitenmodulation, mit einer vorgegebenen Regelcharakteristik, so dass die aktuelle tatsächliche Drehzahl innerhalb eines vorgegebenen Toleranzbereiches um die Solldrehzahl eingestellt wird und/oder bleibt.

Der im Verhältnis zum ersten Regelprozess langsame zweite Regelprozess regelt mithilfe einer Zeitmessung, vorliegend ohne die Verwendung des Drehgeber-Indexsignals des Drehgeberencoders 10, die Solldrehzahl für den Motor 6. Dafür löst der digitale Signalprozessor 9, welcher beispielsweise als Field Programmable Gate Array ausgeführt sein kann, am Ende des Erfassens der Abtastdaten durch die Abtasteinheit 2 zu dem Abtast-Endzeitpunkt ein Signal, beispielsweise einen Interrupt aus. Ein im digitalen Signalprozessor 9 implementiertes Softwareregelmodul stoppt dadurch einen am Anfangszeitpunkt des Übertragungsfensters gestarteten Zeitgeber. Ist der Wert des Zeitgebers nach dem Stoppen Null, so ist im gezeigten Beispiel die gewünschte Synchronisation des Laserscanners zu dem Datenbus 13 (Fig. 1) erreicht und der digitale Signalprozessor 9 gibt keinen neuen Wert für die Solldrehzahl bzw. kein Änderungssignal für ein Verändern der Solldrehzahl an den Hostcontroller 11 weiter. Ist der Wert des Zeitgebers von Null verschieden, so wird vorliegend der digitale Signalprozessor 9 dem Hostcontroller 11 einen neuen Wert für die Solldrehzahl oder ein entsprechendes Änderungssignal für die Solldrehzahl übermitteln, so dass in dem ersten Regelprozess dann eine neue Drehzahl für den Motor 6 eingeregelt wird.

Geht also die Zeit zwischen dem Anfangszeitpunkt des Übertragungsfensters und dem Abtast-Endzeitpunkt gegen Null, dann wird die Synchronisation in diesem Beispiel besser. Die Abtastdaten können dann an den Datenbus übertragen werden, sobald das Erfassen der Abtastdaten abgeschlossen ist, also beispielsweise ein erstes Scan-Datenpaket vorhanden ist. Damit werden Totzeiten, Jitter und ein Überspringen von Übertragungsfenstern zu vermieden.

Ist die Synchronisation schlechter, so wird die Zeit zwischen dem Anfangszeitpunkt des Übertragungsfensters und dem Abtast-Endzeitpunkt größer und es muss nach Abschluss des Erfassens erst noch gewartet werden, bis das entsprechende Übertragungsfenster im Datenbus für die Detektionseinrichtung 1 offen ist. Dies ist ungünstig und führt entsprechend zu Totzeiten.

## Patentansprüche

1. Verfahren zum Betreiben einer Detektionseinrichtung (1, 1') eines Kraftfahrzeugs (15), welche zum Erfassen eines Umgebungsbereiches (12, 12') des Kraftfahrzeugs (15) ausgebildet ist, wobei die Detektionseinrichtung (1, 1') zum Datenaustausch mit einem Datenbus (13) des Kraftfahrzeugs (15) kommuniziert und wiederholt Abtastdaten aus dem Umgebungsbereich (12, 12') erfasst, mit den Schritten:
a) Erfassen von Abtastdaten durch eine Abtasteinheit (2, 2') der Detektionseinrichtung (1, 1') mit einer Erfassungsgeschwindigkeit;
b) Feststellen eines Abtast-Endzeitpunktes, zu welchem das Erfassen der Abtastdaten abgeschlossen ist, durch eine Recheneinheit (3, 3');
c) Ermitteln einer Differenzzeit zwischen dem festgestellten Abtast-Endzeitpunkt und einem Anfangszeitpunkt eines der Detektionseinrichtung (1, 1') gemäß einem Protokoll des Datenbusses zugeordneten Übertragungsfensters durch die Recheneinheit (3, 3'); und
d) Vorgeben der Erfassungsgeschwindigkeit für ein zukünftiges Erfassen von Abtastdaten in Abhängigkeit der ermittelten Differenzzeit durch die Recheneinheit (3, 3'),
wobei das Vorgeben der Erfassungsgeschwindigkeit durch ein Vorgeben von zumindest einem Bewegungscharakteristikum eines Spiegels erfolgt, wobei das Bewegungscharakteristikum durch eine Drehzahl eines rotierenden Spiegels (16) oder eine Verweildauer zumindest eines Mikrospiegels in einer vorgegebenen Kippstellung beschrieben wird.

2. Verfahren nach Anspruch 1,
**gekennzeichnet durch** ein
Synchronisieren des Abtast-Endzeitpunkts mit einem vorgegebenen Zeitraster des Datenbusses (13).

3. Verfahren nach einem der vorhergehenden Ansprüche,
**dadurch gekennzeichnet, dass**
das Vorgeben der Erfassungsgeschwindigkeit ein Erhöhen und ein Verringern der aktuellen Erfassungsgeschwindigkeit umfasst, sodass die Differenzzeit einem vorgegebenen Sollwert angeglichen wird.

4. Verfahren nach Anspruch 3,
**dadurch gekennzeichnet, dass**
der Sollwert mit Null vorgegeben wird.

5. Verfahren nach Anspruch 3,
**dadurch gekennzeichnet, dass**
der Sollwert mit von Null verschieden vorgegeben wird und insbesondere als von Null verschieden ein Liegen des Abtast-Endzeitpunkts zeitlich vor dem Anfangszeitpunkt repräsentiert wird.

6. Verfahren nach Anspruch 3,
**dadurch gekennzeichnet, dass**
der Sollwert von Null verschieden vorgegeben wird und als von Null verschieden ein Liegen des Abtast-Endzeitpunkts zeitlich nach dem Anfangszeitpunkt repräsentiert wird.

7. Verfahren nach einem der vorhergehenden Ansprüche,
**dadurch gekennzeichnet, dass**
die Schritte a), b), c) und d) des Verfahrens wiederholt durchgeführt werden, insbesondere in der Reihenfolge a), b), c), d).

8. Verfahren nach einem der vorhergehenden Ansprüche,
**dadurch gekennzeichnet, dass**
die Detektionseinrichtung (1, 1') mit einem Datenbus (13) mit einem isochronen Übertragungsmodus kommuniziert, insbesondere mit einem Datenbus (13), welcher den FlexRay Standard und/oder die ISO Standards 17458-1 bis 17458-5 und/oder den Time-Triggered Communication on Controller Area Network Standard, TTCAN, unterstützt.

9. Detektionseinrichtung (1, 1') für ein Kraftfahrzeug (15), welche zum Erfassen eines Umgebungsbereiches (12, 12') des Kraftfahrzeugs (15) und zum Kommunizieren in Form eines Datenaustausches mit einem Datenbus (13) des Kraftfahrzeugs (15) ausgebildet ist, und mittels welcher wiederholt Abtastdaten aus dem Umgebungsbereich (12, 12') erfassbar sind, mit
- einer Abtasteinheit (2, 2') zum Erfassen von Abtastdaten mit einer Erfassungsgeschwindigkeit,
**gekennzeichnet durch** eine
- Recheneinheit (3, 3'), mittels welcher ein Abtast-Endzeitpunkt feststellbar ist, zu welchem das Erfassen der Abtastdaten abgeschlossen ist, und mittels welcher eine Differenzzeit zwischen dem festgestellten Abtast-Endzeitpunkt und einem Anfangszeitpunkt eines der Detektionseinrichtung (1, 1') gemäß einem Protokoll des Datenbusses (13) zugeordneten Übertragungsfensters ermittelbar ist sowie mittels welcher die Erfassungsgeschwindigkeit für ein zukünftiges Erfassen von Abtastdaten in Abhängigkeit der ermittelten Differenzzeit vorgebbar ist,
wobei die Abtasteinheit (2, 2') einen bewegbaren Spiegel umfasst und die Erfassunggeschwindigkeit mittels zumindest einem Bewegungscharakteristikum des Spiegels vorgebbar ist, wobei das Bewegungscharakteristikum durch eine Drehzahl eines rotierenden Spiegels (16) oder eine Verweildauer zumindest eines Mikrospiegels in einer vorgegebenen Kippstellung beschrieben wird..

10. Detektionseinrichtung (1, 1') gemäß Anspruch 9,
**dadurch gekennzeichnet, dass**
die Abtasteinheit (2, 2') eine Lichtquelle umfasst, insbesondere eine Laserlichtquelle (7).

11. Detektionseinrichtung (1, 1') gemäß den Ansprüchen 9 oder 10,
**dadurch gekennzeichnet, dass**
die Detektionseinrichtung (1, 1') ein Laserscanner ist.

12. Kraftfahrzeug (15) mit einer Detektionseinrichtung (1, 1') nach einem der Ansprüche 9 bis 11.

## Claims

1. Method for operating a detection device (1, 1') of a motor vehicle (15), which detection device is designed for capturing a surrounding area (12, 12') of the motor vehicle (15), wherein the detection device (1, 1') communicates for the purpose of data interchange with a data bus (13) of the motor vehicle (15) and repeatedly captures scan data from the surrounding area (12, 12'), having the steps of:
a) capturing scan data by means of a scanning unit (2, 2') of the detection device (1, 1') at a capture rate;
b) establishing a scan end time at which the capture of the scan data is complete by means of a computation unit (3, 3');
c) ascertaining a difference time between the established scan end time and a starting time of a transmission window, which is associated with the detection device (1, 1') according to a protocol of the data bus, by means of the computation unit (3, 3'); and
d) prescribing the capture rate for future capture of scan data on the basis of the ascertained difference time by means of the computation unit (3, 3'),
wherein the capture rate is prescribed by prescribing at least one movement characteristic of a mirror,
wherein the movement characteristic is described by a speed of a rotating mirror (16) or a dwell time of at least one micro-mirror in a prescribed tilted position.

2. Method according to Claim 1,
**characterized by**
synchronizing of the scan end time to a prescribed time frame of the data bus (13).

3. Method according to either of the preceding claims,
**characterized in that**
the prescribing of the capture rate comprises increasing and decreasing the present capture rate, so that the difference time is brought into line with a prescribed setpoint value.

4. Method according to Claim 3,
**characterized in that**
the setpoint value is prescribed at zero.

5. Method according to Claim 3,
**characterized in that**
the setpoint value is prescribed at non-zero and in particular the circumstance of the scan end time being at a time before the starting time is represented as non-zero.

6. Method according to Claim 3,
**characterized in that**
the setpoint value is prescribed at non-zero and the circumstance of the scan end time being at a time after the starting time is represented as non-zero.

7. Method according to one of the preceding claims,
**characterized in that**
steps a), b), c) and d) of the method are performed repeatedly, in particular in the order a), b), c), d).

8. Method according to one of the preceding claims,
**characterized in that**
the detection device (1, 1') communicates with a data bus (13) having an isochronous transmission mode, in particular with a data bus (13) that supports the FlexRay standard and/or ISO standards 17458-1 to 17458-5 and/or the Time-Triggered Communication on Controller Area Network standard, TTCAN.

9. Detection device (1, 1') for a motor vehicle (15), which detection device is designed for capturing a surrounding area (12, 12') of the motor vehicle (15) and for communicating in the form of a data interchange with a data bus (13) of the motor vehicle (15), and by means of which detection device scan data from the surrounding area (12, 12') are repeatedly capturable, having
- a scanning unit (2, 2') for capturing scan data at a capture rate,
**characterized by** a
- computation unit (3, 3') by means of which a scan end time is establishable, at which the capture of the scan data is complete, and by means of which a difference time between the established scan end time and a starting time of a transmission window, which is associated with the detection device (1, 1') according to a protocol of the data bus (13), is ascertainable and also by means of which the capture rate for future capture of scan data is prescribable on the basis of the ascertained difference time, wherein the scanning unit (2, 2') comprises a movable mirror and the capture rate is prescribable by means of at least one movement characteristic of the mirror,
wherein
the movement characteristic is described by a speed of a rotating mirror (16) or a dwell time of at least one micro-mirror in a prescribed tilted position.

10. Detection device (1, 1') according to Claim 9,
**characterized in that**
the scanning unit (2, 2') comprises a light source, in particular a laser light source (7).

11. Detection device (1, 1') according to Claim 9 or 10,
**characterized in that**
the detection device (1, 1') is a laser scanner.

12. Motor vehicle (15) having a detection device (1, 1') according to one of Claims 9 to 11.

## Revendications

1. Procédé pour faire fonctionner un dispositif de détection (1, 1') d'un véhicule automobile (15), lequel est configuré pour acquérir une zone environnante (12, 12') du véhicule automobile (15), le dispositif de détection (1, 1') communiquant avec un bus de données du véhicule automobile (15) pour l'échange de données et acquérant de manière répétitive des données de balayage depuis la zone environnante (12, 12'), comprenant les étapes suivantes :
a) acquisition de données de balayage par une unité de balayage (2, 2') du dispositif de détection (1, 1') avec une vitesse d'acquisition ;
b) définition, par une unité de calcul (3, 3'), d'un instant de fin de balayage auquel l'acquisition des données de balayage est terminée ;
c) détermination, par l'unité de calcul (3, 3'), d'une différence de temps entre l'instant de fin de balayage défini et un instant de début d'une fenêtre de transmission associée au dispositif de détection (1, 1') conformément à un protocole du bus de données ; et
d) prédéfinition, par l'unité de calcul (3, 3'), d'une vitesse d'acquisition pour une future acquisition de données de balayage en fonction de la différence de temps déterminée,
la prédéfinition de la vitesse d'acquisition étant effectuée en prédéfinissant au moins une caractéristique de mouvement d'un miroir,
la caractéristique de mouvement étant décrite par une vitesse de rotation d'un miroir (16) en rotation ou une durée de séjour d'au moins un micromiroir dans une position de basculement prédéfinie.

2. Procédé selon la revendication 1, **caractérisé par** une synchronisation de l'instant de fin de balayage avec une grille de temps prédéfinie du bus de données (13) .

3. Procédé selon l'une des revendications précédentes, **caractérisé en ce que** la prédéfinition de la vitesse d'acquisition comprend une augmentation et une diminution de la vitesse d'acquisition actuelle, de sorte que la différence de temps est ajustée à une valeur de consigne prédéfinie.

4. Procédé selon la revendication 3, **caractérisé en ce que** la valeur de consigne est prédéfinie à zéro.

5. Procédé selon la revendication 3, **caractérisé en ce que** la valeur de consigne est prédéfinie différente de zéro et notamment une présence de l'instant de fin de balayage chronologiquement avant l'instant de début est représentée différente de zéro.

6. Procédé selon la revendication 3, **caractérisé en ce que** la valeur de consigne est prédéfinie différente de zéro et une présence de l'instant de fin de balayage chronologiquement après l'instant de début est représentée différente de zéro.

7. Procédé selon l'une des revendications précédentes, **caractérisé en ce que** les étapes a), b), c) et d) du procédé sont exécutées de manière répétitive, notamment dans l'ordre a), b), c), d).

8. Procédé selon l'une des revendications précédentes, **caractérisé en ce que** le dispositif de détection (1, 1') communique avec un bus de données (13) avec un mode de transmission isochrone, notamment avec un bus de données (13) qui prend en charge la norme FlexRay et/ou les normes ISO 17458-1 à 17458-5 et/ou la norme TTCAN (communication déclenchée dans le temps sur bus CAN).

9. Dispositif de détection (1, 1') pour un véhicule automobile (15), lequel est configuré pour acquérir une zone environnante (12, 12') du véhicule automobile (15) et pour communiquer sous la forme d'un échange de données avec un bus de données (13) du véhicule automobile (15), et au moyen duquel des données de balayage peuvent être acquises de manière répétitive depuis la zone environnante (12, 12'), comprenant
- une unité de balayage (2, 2') destinée à acquérir des données de balayage avec une vitesse d'acquisition, **caractérisé par** une
- unité de calcul (3, 3'), au moyen de laquelle peut être défini un instant de fin de balayage auquel l'acquisition des données de balayage est terminée, et au moyen de laquelle peut être déterminée une différence de temps entre l'instant de fin de balayage défini et un instant de début d'une fenêtre de transmission associée au dispositif de détection (1, 1') conformément à un protocole du bus de données, et aussi au moyen de laquelle peut être prédéfinie la vitesse d'acquisition pour une future acquisition de données de balayage en fonction de la différence de temps déterminée,
l'unité de balayage (2, 2') comportant un miroir mobile et la vitesse d'acquisition pouvant être prédéfinie au moyen d'au moins une caractéristique de mouvement du miroir,
la caractéristique de mouvement étant décrite par une vitesse de rotation d'un miroir (16) en rotation ou une durée de séjour d'au moins un micromiroir dans une position de basculement prédéfinie.

10. Dispositif de détection (1, 1') selon la revendication 9, **caractérisé en ce que** l'unité de balayage (2, 2') comporte une source de lumière, notamment une source de lumière laser.

11. Dispositif de détection (1, 1') selon l'une des revendications 9 ou 10, **caractérisé en ce que** le dispositif de détection (1, 1') est un dispositif de balayage à laser.

12. Véhicule automobile (15) comprenant un dispositif de détection (1, 1') selon l'une des revendications 9 à 11.
